# EUROPÄISCHE PATENTSCHRIFT

(11) **EP 0 717 672 B1**
(45) Veröffentlichungstag und Bekanntmachung des Hinweises auf die Patenterteilung: **09.12.1998**
(21) Anmeldenummer: 94925340.5
(22) Anmeldetag: 02.09.1994
(51) Int. Cl.: B23K 9/00

(54) **VORRICHTUNG ZUM ELEKTRISCHEN SCHWEISSEN MITTELS ZUGEFÜHRTEN SCHWEISSZUSATZWERKSTOFFS IN EINER NASSEN UMGEBUNG**
ELECTRIC SOLDERING DEVICE USING A WELDING FILLER SUPPLIED IN A WET ENVIRONMENT
DISPOSITIF DE SOUDAGE ELECTRIQUE AVEC DU METAL D'APPORT DANS UN ENVIRONNEMENT HUMIDE

(30) Priorität: 07.09.1993 DE 4330157
(43) Veröffentlichungstag der Anmeldung: 26.06.1996
(73) Patentinhaber: GKSS-FORSCHUNGSZENTRUM GEESTHACHT GMBH, 21502 Geesthacht (DE)
(72) Erfinder: LÖBEL, Peter, D-21442 Toppenstedt (DE); PUNESSEN, Willi, D-21502 Geesthacht (DE); SZELAGOWSKI, Peter, D-25335 Elmshorn (DE)
(74) Vertreter: Niedmers, Ole, Dipl.-Phys.
(86) Internationale Anmeldenummer: DE9401010
(87) Internationale Veröffentlichungsnummer: WO9507164

(56) Entgegenhaltungen:
- GB-A- 2 136 721
- US-A- 4 035 602
- US-A- 4 139 758

## Beschreibung

Die Erfindung betrifft ein Verfahren zum elektrischen Schweißen mittels zugeführten Schweißzusatzwerkstoffs in nasser Umgebung, wobei der Schweißzusatzwerkstoff an den Schweißort in einer schlauchförmigen Verbindung geführt wird, in der ein gegenüber dem äußeren Umgebungsdruck höherer Innendruck des Innenmediums vorherrscht, so daß der Schweißzusatzwerkstoff in einer wasserfreien Umgebung an den Schweißort zuführbar ist, ohne daß Wasser in die schlauchförmige Verbindung eintritt.

Ein Verfahren dieser Art ist bekannt (US-A-4 035 602). Das bekannte Verfahren bezieht sich auf sogenanntes "Schutzgasschweißen" unter Wasser, bei dem der Schweißort durch den Lichtbogen, der sich zwischen Elektrode und Oberfläche des zu schweißenden Werkstücks aufspannt, durch das diesen Bereich im Augenblick des Schweißens umhüllende Schutzgas "wasserfrei" gehalten werden soll. Bei einer in diesem bekannten Dokument weiterhin beschriebenen abgewandelten Ausführungsform wird ein zweiter Schutzgasmantel um den ersten, den Lichtbogen umhüllenden Schutzgasmantel herumgelegt.

Elektrisches Schweißen unter Wasser, d.h. in unmittelbar nasser Umgebung, wird seit vielen Jahren mit mehr oder weniger gutem Erfolg durchgeführt. Unabhängig davon, daß das elektrische Schweißen manuell oder automatisiert in nasser Umgebung erfolgt, werden Schweißnähte bis in einen Bereich von 10 Metern unterhalb der Wasseroberfläche qualitativ befriedigend hergestellt. Die Güte einer Schweißnaht sinkt aber sehr stark mit zunehmendem Umgebungsdruck, d.h. bei größer werdenden Wassertiefen, in denen elektrische Schweißungen vorgenommen werden sollen. Für den zunehmenden Qualitätsverlust der Schweißnähte bei größer werdendem Umgebungsdruck bzw. größer werdender Tiefe ist überwiegend die Dissoziation des Wassers in Wasserstoff und Sauerstoff durch den erzeugten Lichtbogen am Schweißort verantwortlich. Je größer der Umgebungsdruck am Schweißort ist, umso höher ist der Einfluß des Wasserstoffs und des Sauerstoffs auf die Güte der Schweißnaht.

Es ist Aufgabe der vorliegenden Erfindung, ein Verfahren zu schaffen, mit dem auch in sehr großen Wassertiefen, d.h. bei hohem Umgebungsdruck eine hohen Qualitätsanforderungen genügende Schweißnahtqualität erreicht wird, unabhängig von der gewählten Tiefe und damit unabhängig vom momentanen Umgebungsdruck, wobei das Verfahren an sich einfach ausführbar und einfach handhabbar sein soll.

Gelöst wird die Aufgabe gemäß der Erfindung dadurch, daß das Verfahren derart gestaltet ist, daß der Innendruck des Innenmediums in Abhängigkeit des äußeren Umgebungsdrucks mittels eines Regelventils immer größer als der Umgebungsdruck haltbar ist.

Der wesentliche Vorteil der erfindungsgemäß vorgeschlagenen Lösung besteht darin, daß dafür Sorge getragen wird, daß der Schweißzusatzwerkstoff völlig wasserfrei gehalten wird bis unmittelbar an den Ort (Lichtbogen), wo die Schweißung durchgeführt wird. Auch wird beispielsweise durch die erfindungsgemäß vorgeschlagene Lösung vorteilhafterweise in großen Tiefen, d.h. bei großem Umgebungsdruck ein druckbedingtes, vermehrtes Eindringen von Wasser in ein Flußmittel, das im zugeführten Schweißzusatzwerkstoff gegebenenfalls schon vorhanden sein kann, vermieden. Diese Flußmittel sind normalerweise stark hygroskopisch und würden normalerweise in nasser Umgebung, wenn die erfindungsgemäß vorgeschlagene Maßnahme nicht vorgenommen werden würde, nochmals zu einer Verschlechterung der Qualität der Schweißnaht in nasser Umgebung führen.

Ein weiterer wesentlicher Vorteil ist, daß der Schweißprozess eine wesentliche Verbesserung des Schweißgutes zur Folge hat (Vergütung im Hinblick auf Schweißgutzähigkeit).

Gemäß einer vorteilhaften Ausgestaltung des Verfahrens ist der Schweißzusatzwerkstoff von einem abgesetzt vom Schweißort angeordneten Schweißvorrat zuführbar. Diese Ausgestaltung hat den Vorteil, daß unter Wasser ein behinderungsfreies Arbeiten möglich ist, da der Schweißzusatzwerkstoff das Arbeiten wegen der abgesetzten Anordung nicht behindert.

Besonders vorteilhaft ist es, den Schweißzusatzwerkstoff in einer schlauchförmigen Verbindung zum Schweißort zu führen, womit eine sehr einfache aber wirkungsvolle Ausgestaltung des Verfahrens möglich ist, um eine Kontaktierung des Schweißguts mit dem Umgebungswasser zu vermeiden.

Grundsätzlich ist es möglich, den Schweißzusatzwerkstoff unmittelbar am Schweißort beispielsweise aus einer Schweißpistole auf beliebige Weise dichtend gegen die nasse Umgebung austreten zu lassen, beispielsweise mittels einer mechanischen Dichtung, die beispielsweise das Eindringen des Umgebungswassers in die schlauchförmige Verbindung vermeidet. Da aber derartige mechanische Dichtungen, da die Vorrichtung bestimmungsgemäß weitgehend unabhängig von der gewählten Wassertiefe mit großem Erfolg arbeiten soll , nur auf sehr aufwendige Weise gestaltbar sind, um den gesamten möglichen Druckbereich des Umgebungsdrucks des Wassers abzudichten, wird bei einer weiteren sehr vorteilhaften Ausgestaltung vorgeschlagen, daß in der schlauchförmigen Verbindung ein gegenüber dem äußeren Umgebungsdruck höherer Innendruck eines Innenmediums aufgebaut wird, so daß aufgrund des gemäß der vorher aufgeführten Druckrelation Wasser nie in den Innenraum der schlauchförmigen Verbindung eindringen kann und somit auf einfache Weise eine Benetzung des Schweißzusatzwerkstoffes mit Wasser verhindert wird.

Bei einer noch anderen vorteilhaften Ausgestaltung des Verfahrens ist der Schweißzusatzwerkstoff aus einem den Schweißzusatzwerkstoffvorrat aufnehmenden druckdichten Behälter zuführbar. Dabei wird der druckdichte Behälter mit dem eigentlichen Schweißgerät bzw. einer Schweißpistole über die schlauchförmige Verbindung verbunden, wobei vorteilhafterweise der in der schlauchförmigen Verbindung und/oder im Behälter aufbaubare Innendruck des Innenmediums in Abhängigkeit des äußeren Umgebungsdrucks mittels eines Regelmittels immer größer als der Umgegungsdruck haltbar ist. Aus diesem Grunde braucht auch der Behälter vorteilhafterweise nur derart mechanisch stabil ausgebildet sein, daß die vorerwähnte Druckrelation erfüllt ist, wobei der jeweilige Innendruck nur geringfügig größer als der Außendruck zu sein braucht, um zu verhindern, daß Wasser in die schlauchförmige Verbindung und den Behälter eindringt.

Grundsätzlich kann das Innenmedium für den Behälter und/oder die schlauchförmige Verbindung vor Ort unter Wasser durch entsprechende Mediumvorräte in Form von Flaschen bereitgestellt werden, vorteilhafterweise wird aber das Innenmedium von außen in die schlauchförmige Verbindung und/oder den Behälter mittels einer Schlauchverbindung eingebracht, wobei das Medium an der Wasseroberfläche gegebenenfalls sogar direkt erzeugbar ist und dann in den Behälter und die schlauchförmige Verbindung über eine weitere schlauchförmige Verbindung zuführbar ist.

Die Zufuhr des Innenmediums in den Behälter und/oder in die schlauchförmige Verbindung erfolgt vorteilhafterweise über eine auslösbare Ventileinrichtung, die in oder an dem Behälter angeordnet ist und manuell , gegebenenfalls auch durch das Regelmittel beaufschlagt wird, um die oben erwähnte Druckrelation zwischen Innendruck und Umgebungsdruck aufrechtzuerhalten.

Das Innenmedium selbst kann grundsätzlich ein beliebiges geeignetes Gas sein, wobei am wenigsten aufwendig, weil einfach bereitstellbar, das Innenmedium vorzugsweise Luft ist. Das Innenmedium kann aber auch, wenn es auf höchste Schweißnahtgüten ankommt, ein Inertgas sein.

Schließlich ist der Schweißzusatzwerkstoff verfahrensseitig mit einem vorgebbaren Vorschub zum Schweißort zuführbar, so daß immer sicherstellbar ist, daß beispielsweise beim Austritt des Schweißzusatzwerkstoffs aus der Schweißpistole eine minimal mögliche Fläche des Schweißzusatzwerkstoffes tatsächlich mit dem Umgebungswasser in Berührung kommt und auch durch diese Maßnahme nochmals eine Verbesserung der Güte der Schweißnaht möglich ist.

Dabei ist vorzugsweise im Behälter eine Vorschubeinrichtung für den Schweißzusatzwerkstoff angeordnet, die beispielsweise elektromotorisch angetrieben und manuell oder auch automatisch gesteuert werden kann.

Die Erfindung wird nun unter Bezugnahme auf die einzige schematische Zeichnung anhand eines Ausführungsbeispieles eingehend beschrieben. Diese zeigt:
in der Seitenansicht eine Schweißpistole, aus der der drahtförmige Schweißzusatzwerkstoff austritt, wobei die Schweißpistole über eine schlauchförmige Verbindung mit einem Behälter verbunden ist, in dem der Schweißzusatzwerkstoffvorrat sowie eine Vorschubeinrichtung für die Zufuhr von Schweißzusatzwerkstoff sowie ein Regelmittel angeordnet sind, wobei das Regelmittel für eine bestimmungsgemäße Steuerung des Innenraumdrucks eines im Behälter und in der schlauchförmigen Verbindung befindlichen Innenmediums sorgt.

Die Vorrichtung 10 zur Ausführung des Verfahrens besteht im wesentlichen aus einer Schweißpistole 16 an sich bekannter Bauart, versehen jedoch mit einem wasserdichten Bedienkopf und einem druckdichten Behälter 18, wobei der Behälter 18 und die Schweißpistole 16 über eine schlauchförmige Verbindung 15 gegenüber dem Umgebungsmedium druckdicht miteinander verbunden sind. Die Länge der schlauchförmigen Verbindung kann in Abhängigkeit des durchzuführenden Schweißvorhabens beliebig geeignet gewählt werden und hat an sich keinen Einfluß auf die bestimmungsgemäße Funktion der Vorrichtung 10.

Im Behälter 18 ist ein Schweißzusatzwerkstoffvorrat 14 in Form einer Trommel dargestellt, auf der der Schweißzusatzwerkstoff 11 auf an sich bekannte Weise aufgewickelt ist.

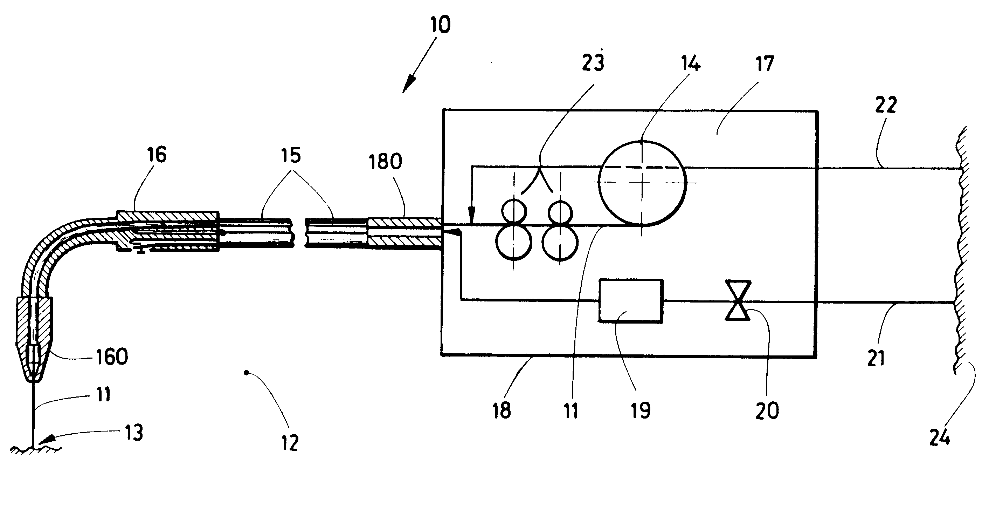

## Patentansprüche

1. Verfahren zum elektrischen Schweißen mittels eines zugeführten Schweißzusatzwerkstoffs in nasser Umgebung, wobei der Schweißzusatzwerkstoff (11) an den Schweißort (13) in einer schlauchförmigen Verbindung (15) geführt wird, in der ein gegenüber dem äußeren Umgebungsdruck höherer Innendruck eines Innenmediums (17) vorherrscht, so daß der Schweißzusatzwerkstoff (11) in einer wasserfreien Umgebung an den Schweißort (13) zuführbar ist, ohne daß Wasser in die schlauchförmige Verbindung (15) eintritt, dadurch gekennzeichnet, daß der Innendruck des Innenmediums (17) in Abhängigkeit des äußeren Umgebungsdrucks mittels eines Regelmittels (19) immer größer als der Umgebungsdruck gehalten ist.

2. Verfahren nach Anspruch 1, dadurch gekennzeichnet, daß der Schweißzusatzwerkstoff (11) von einem abgesetzt vom Schweißort (13) angeordneten Schweißzusatzwerkstoffvorrat (14) zuführbar ist .

3. Verfahren nach einem oder beiden der Ansprüche 1 oder 2, dadurch gekennzeichnet, daß der Schweißzusatzwerkstoff (11), in einer schlauchförmigen Verbindung (15) geführt, dem Schweißort (16) zuführbar ist.

4. Verfahren nach Anspruch 3, dadurch gekennzeichnet, daß in der schlauchförmigen Verbindung (15) ein gegenüber dem äußeren Umgebungsdruck höherer Innendruck eines Innenmediums (17) vorherrscht.

5. Verfahren nach einem oder mehreren der Ansprüche 1 bis 4, dadurch gekennzeichnet, daß der Schweißzusatzwerkstoff (11) aus einem dem Schweißzusatzwerkstoffvorrat (14) aufnehmenden druckdichten Behälter (18) zuführbar ist.

6. Verfahren nach Anspruch 5, dadurch gekennzeichnet, daß der in der schlauchförmigen Verbindung (15) und/oder im Behälter (18) aufbaubare Innendruck des Innenmediums (17) in Abhängigkeit des äußeren Umgebungsdrucks mittels eines Regelmittels immer größer als der Umgebungsdruck haltbar ist.

7. Verfahren nach einem oder mehreren der Ansprüche 4 bis 6, dadurch gekennzeichnet, daß das Innenmedium (17) von außen in die schlauchförmige Verbindung (15) und/oder in den Behälter (18) einbringbar ist.

8. Verfahren nach Anspruch 7, dadurch gekennzeichnet, daß die Zufuhr des Innenmediums (17) über eine auslösbare Ventileinrichtung (20) erfolgt.

9. Verfahren nach einem oder mehreren der Ansprüche 4 bis 8, dadurch gekennzeichnet, daß das Innenmedium (17) Luft ist.

10. Verfahren nach einem oder mehreren der Ansprüche 4 bis 9, dadurch gekennzeichnet, daß das Innenmedium (17) ein Inertgas ist.

11. Verfahren nach einem oder mehreren der Ansprüche 4 bis 9, dadurch gekennzeichnet, daß das Innenmedium ein Inertgas-Luftgemisch, ein Inertgas-Sauerstoffgemisch oder ein Inertgas-CO/CO₂ Gemisch ist.

12. Verfahren nach einem oder mehreren der Ansprüche 1 bis 11, dadurch gekennzeichnet, daß der Schweißzusatzwerkstoff (11) mit vorgebbarem Vorschub zum Schweißort zuführbar ist.

13. Verfahren nach Anspruch 12, dadurch gekennzeichnet, daß im Behälter (18) eine Vorschubeinrichtung (23) für der Schweißzusatzwerkstoff (11) angeordnet ist.

## Claims

1. Method of electric arc welding by means of a welding additive material supplied in a wet environment, the welding additive material (11) being supplied to the welding location (13) in a hose-shaped connection (15) within which is present an internal pressure, of an internal medium (17), which is higher than the external ambient pressure, so that the welding additive material (11) can be supplied to the welding location (13) in a water-free environment without water entering the hose-shaped connection (15), characterized in that the internal pressure of the internal medium (17) is, as a function of the external ambient pressure, always kept greater than the ambient pressure by a control means (19).

2. Method according to Claim 1, characterized ill that the welding additive material (11) can be supplied from a welding additive material store (14) provided to one side of the welding location (13).

3. Method according to one or both of Claims 1 and 2, characterized in that the welding additive material (11) can be supplied, guided in a hose-shaped connection (15), to the welding location (13).

4. Method according to Claim 3, characterized in that an internal pressure, of the internal medium (17), which is higher than the external ambient pressure is present in the hose-shaped connection (15).

5. Method according to one or more of Claims 1 to 4, characterized in that the welding additive material (11) can be supplied from a pressure-tight container (18) which accommodates the welding additive material store (14).

6. Method according to Claim 5, characterized in that the internal pressure of the internal medium (17), which pressure can be built up in the hose-shaped connection (15) and/or in the container (18), can, as a function of the external ambient pressure, always be kept greater than the ambient pressure by a control means.

7. Method according to one or more of Claims 4 to 6, characterized in that the internal medium (17) can be introduced from outside into the hose-shaped connection (15) and/or into the container (18).

8. Method according to Claim 7, characterized in that the supply of the internal medium (17) takes place by means of a triggerable valve device (20).

9. Method according to one or more of Claims 4 to 8, characterized in that the internal medium (17) is air.

10. Method according to one or more of Claims 4 to 9, characterized in that the internal medium (17) is an inert gas.

11. Method according to one or more of Claims 4 to 10, characterized in that the internal medium is a mixture of inert gas and air, a mixture of inert gas and oxygen or a mixture of inert gas and CO/CO₂.

12. Method according to one or more of Claims 1 to 11, characterized in that the welding additive material (11) can be fed to the welding location at a rate which can be specified.

13. Method according to Claim 12, characterized in that a feed device (23) for the welding additive material (11) is provided within the container (18).

## Revendications

1. Procédé de soudage électrique au moyen d'un métal d'apport amené dans un environnement humide, le métal d'apport (11) étant amené sur le lieu de soudage (13) dans une liaison en forme de boucle (15), dans laquelle règne une pression intérieure, supérieure à la pression ambiante extérieure, d'un fluide intérieur (17), de sorte que le métal d'apport (11) peut être amené dans un environnement sans eau sur le lieu de soudage (13), sans que de l'eau ne pénètre dans la liaison en forme de tuyau (15), caractérisé en ce que la pression intérieure du fluide intérieur (17) est maintenue à une valeur toujours supérieure à la pression ambiante, à l'aide d'un moyen de réglage (19), en fonction de la pression ambiante extérieure.

2. Procédé selon la revendication 1, caractérisé en ce que le métal d'apport (11) peut être amené à partir d'une réserve de métal d'apport (14) disposée en un lieu éloigné de l'emplacement de soudure (13).

3. Procédé selon l'une des revendications 1 ou 2, ou selon ces deux revendications, caractérisé en ce que le métal d'apport (11) peut être amené à l'emplacement de soudage (16) en étant guidé dans une liaison en forme de tuyau (15).

4. Procédé selon la revendication 3, caractérisé en ce que dans la liaison en forme de tuyau (15) règne une pression intérieure d'un fluide intérieur (17), qui est supérieure à la pression ambiante extérieure.

5. Procédé selon une ou plusieurs des revendications 1 à 4, caractérisé en ce que le métal d'apport (11) peut être amené à partir d'un récipient (18) étanche à la pression, qui loge la réserve de métal d'apport (14).

6. Procédé selon la revendication 5, caractérisé en ce que la pression intérieure du fluide intérieur (17), qui peut s'établir dans la liaison en forme de tuyau (15) et/ou dans le récipient (18), peut être établie en fonction de la pression ambiante extérieure, à l'aide d'un moyen de réglage, à une valeur toujours supérieure à la pression ambiante.

7. Procédé selon une ou plusieurs des revendications 4 à 6, caractérisé en ce que le fluide intérieur (17) peut être amené, depuis l'extérieur, dans la liaison en forme de tuyau (15) et/ou dans le récipient (18).

8. Procédé selon la revendication 7, caractérisé en ce que l'amenée du fluide intérieur (17) s'effectue par l'intermédiaire d'un dispositif de soupape déclenchable (20).

9. Procédé selon une ou plusieurs des revendications 4 à 8, caractérisé en ce que le fluide intérieur (17) est l'air.

10. Procédé selon une ou plusieurs des revendications 4 à 9, caractérisé en ce que le fluide intérieur est un gaz inerte.

11. Procédé selon une ou plusieurs des revendications 4 à 9, caractérisé en ce que le fluide intérieur est un mélange gaz inerte-air, un mélange gaz inerte-oxygène ou un mélange gaz inerte-C0/CO₂.

12. Procédé selon une ou plusieurs des revendications 1 à 11, caractérisé en ce que le métal d'apport (11) peut être amené sur le lieu de soudage avec une avance pouvant être prédéterminée.

13. Procédé selon la revendication 12, caractérisé en ce qu'un dispositif d'avance (23) pour le métal d'apport (11) est disposé dans le récipient (18).
